# EUROPÄISCHE PATENTSCHRIFT

(11) **EP 0 793 784 B1**
(45) Veröffentlichungstag und Bekanntmachung des Hinweises auf die Patenterteilung: **12.08.1998**
(21) Anmeldenummer: 95932613.3
(22) Anmeldetag: 21.09.1995
(51) Int. Cl.: F16G 13/16

(54) **ENERGIEFÜHRUNGSKETTE MIT FÜHRUNGSANSCHLAG**
ENERGY GUIDING CHAIN WITH GUIDING STOPS
CHAINE DE GUIDAGE D'ENERGIE POURVUE DE BUTEES DE GUIDAGE

(30) Priorität: 21.09.1994 DE 4433678
(43) Veröffentlichungstag der Anmeldung: 10.09.1997
(73) Patentinhaber: IGUS SPRITZGUSSTEILE FÜR DIE INDUSTRIE GmbH, D-51147 Köln (DE)
(72) Erfinder: SALEH, Rolf, D-53859 Niederkassel (DE); FLORIAN, Dirk, D-42781 Haan (DE); BLASE, Frank, D-51429 Bergisch Gladbach (DE)
(74) Vertreter: Stachow, E.-W., Prof. Dr.
(86) Internationale Anmeldenummer: DE9501297
(87) Internationale Veröffentlichungsnummer: WO9609481

(56) Entgegenhaltungen:
- EP-A- 0 456 537
- DE-A- 4 307 081
- GB-A- 1 249 018
- US-A- 3 779 003

## Beschreibung

Die Erfindung betrifft eine Energieführungskette zur Aufnahme und zum Führen von Stromkabeln, Hydraulikschläuchen und dergleichen, deren Kettenglieder aus gegenüberliegenden Seitenwänden und diese verbindenden gegenüberliegenden Querstegen bestehen, wobei die Seitenwände benachbarter Kettenglieder gelenkig miteinander verbunden sind und ihre Verschwenkbarkeit relativ zueinander in beide Richtungen durch Anschläge begrenzt ist, wobei weiterhin die Energieführungskette beim Betrieb des an die Kabel bzw. Schläuche angeschlossenen Energieverbrauchers einen unteren, etwa geradlinigen Bereich (Untertrum) bildet, an den sich mittels eines Umlenkbereiches von 180° ein oberer, durchhängender Bereich (Obertrum) anschließt, der mit seiner Unterseite zumindest teilweise auf der Oberseite des Untertrums gleitet.

Gattungsgemäße Energieführungsketten tragen, führen und schützen Leitungen, die sich bewegen und zur Energieversorgung von bewegten Maschinen oder bewegten Maschinenteilen dienen.

Bei horizontal angeordneten Energieführungsketten wird bei der Bewegung der Kette ein Untertrum gebildet, das beispielsweise auf einem Tragboden aufliegt. An das Untertrum schließt sich ein Umlenkbereich von 180° an, der das Untertrum mit einem Obertrum verbindet. Das Obertrum hängt nach unten durch und gleitet mit seiner Unterseite zumindest bereichsweise auf der Oberseite des Untertrums.

Damit bei der geforderten großen Anzahl von Lastspielen bzw. Bewegungswechseln eine Zerstörung der Kette durch reibenden bzw. abrasiven Verschleiß nicht erfolgt, ragen die Seitenwände, die vergleichsweise dick ausgebildet sind, geringfügig mit einer Gleitkante über die Querstege hinaus, so daß im Normalfall nur diese vergleichsweise stabilen Gleitkanten durch Reibung beansprucht werden.

Insbesondere bei längeren Verfahrwegen der Energieführungskette ohne Verwendung von Führungsrinnen kommt es jedoch aufgrund des unvermeidlichen Spieles in den Gelenken der Kettenglieder zu einer seitlichen Abweichung vom Geradlauf der Kette, was dazu führt, daß die Gleitkanten der Seitenwände des Obertrums über die Außenseite der unteren Querstege gleiten, so daß diese verhältnismäßig dünnen Bauteile durch Abrasion beaufschlagt und im ungünstigsten Falle zerstört werden können. Darüber hinaus kann die Kette bei Abweichungen vom Geradlauf verkanten und seitlich abkippen.

Außerdem kommt es durch die seitliche Abweichung zu einer erhöhten Belastung der Gelenkzapfen der Kettenglieder, so daß insgesamt die Lebensdauer der Energieführungskette herabgesetzt sein kann.

Der Erfindung liegt die Aufgabe zugrunde, eine gattungsgemäße Energieführungskette zu schaffen, bei der seitliche Abweichungen von der Laufrichtung vermieden werden und auf Führungskanäle und dergleichen verzichtet werden kann.

Diese Aufgabe wird erfindungsgemäß dadurch gelöst, daß Kettenglieder vorgesehen sind, die an der Außenseite mindestens einer Seitenwand einen Führungsanschlag für das gegenüberliegende Trum tragen, wobei die Führungsanschläge in einer zur Laufebene der Kette senkrecht liegenden Ebene begrenzt bewegbar sind.

Durch die erfindungsgemäßen Führungsanschläge werden in dem Kettenbereich, in dem das Obertrum auf dem Untertrum gleitet, die Seitenwände des gegenüberliegenden Trums übergriffen und in Laufrichtung der Kette geführt, so daß seitliche Abweichungen zumindest in diesem Bereich nicht mehr möglich sind.

Dadurch findet eine Relativbewegung zwischen Obertrum und Untertrum derart statt, daß die stabilen Gleitkanten der Seitenwände aufeinander gleiten und somit die durch Reibung hervorgerufene Abrasion nur in diesem Bereich erfolgt. Weiterhin wird ein Verkanten und Abkippen der Kette vermieden.

Vorzugsweise sind dabei jeweils die gegenüberliegenden Seiten von Kettengliedern mit den Führungsanschlägen versehen, wobei sich zwischen Kettengliedern mit Führungsanschlägen mehrere der üblichen Kettenglieder ohne Führungsanschläge befinden können.

Die Führungsfläche des Führungsanschlags kann im Bereich des Untertrums die Oberseite des Kettenglieds nach oben und die Unterseite des Kettenglieds im Bereich des Obertrums nach unten überragen.

Dadurch, daß die Führungsanschläge in einer zur Laufebene der Kette senkrecht liegenden Ebene begrenzt bewegbar sind, können z. B. die Führungsanschläge des Obertrums durch die unteren Führungsanschläge nach oben verschoben werden, so daß die übereinander angeordneten Führungsanschläge aneinander vorbeifahren können, ohne daß es zu einem Abheben des Obertrums in diesem Bereich kommt.

Dazu weisen die Führungsanschläge zweckmäßigerweise gerade oder kurvenförmige Anlaufschrägen auf, die bei der Bewegung des Obertrums ein allmähliches Anheben bzw. Verschwenken der oberen Führungsanschläge bewirken.

In einer bevorzugten Ausführung sind die Führungsanschläge des Obertrums in ihrer nach oben verschwenkten oder verschobenen Stellung lösbar festlegbar.

Neben verschwenkbaren oder verschiebbaren Führungsanschlägen können auch drehbare Führungskreuze oder Führungssterne verwendet werden, die frei drehbar an den Seitenwänden der Kettenglieder angeordnet sind. Beim Aneinandergleiten des Ober- und des Untertrums werden bei dieser Ausführungsart die oberen Drehkreuze durch den Eingriff der unteren Drehkreuze nach Art von ineinandergreifenden Zahnrädern verdreht, so daß auch hier ein Abheben der Kette im Bereich der übereinanderliegenden Führungsanschläge nicht erfolgt und die Gleitbewegung nicht gestört wird.

Das Obertrum kann mit Hilfe der Führungsanschläge auch dann auf dem Untertrum ohne Seitenabweichungen geführt werden, wenn beispielsweise nur die unteren Führungsanschläge mit ihrer Führungsfläche die Seitenwände des Obertrums bereichsweise seitlich umgreifen und die oberen Führungsanschläge in einer nach oben verschobenen oder verschwenkten Stellung festgehalten werden. Dabei werden die unter der Wirkung der Schwerkraft nach unten gerutschten Führungsanschläge des Obertrums vom ersten Führungsanschlag des Untertrums nach dem Umlenkbereich nach oben gehoben oder verschwenkt und bleiben dann in dieser oberen angehobenen Stellung so lange fixiert, bis sich beim Zurückfahren der Kette die vorstehende Oberseite der Führungsanschläge auf den Boden auflegt und dort unter dem Eigengewicht der Führungskette wieder aus der fixierten Stellung gedrückt wird.

Auf diese Weise ist sichergestellt, daß bzgl. der Führungsanschläge nur seitliche Führungs- bzw. Reibungskräfte wirken, so daß die Bewegung der Kette erleichtert ist.

Um die vertikale Verschiebbarkeit bzw. Verschwenkbarkeit der Führungsanschläge zu ermöglichen bzw. deren Festlegung in einer nach oben verschobenen Position zu erreichen, können die Führungsanschläge mit Hilfe von Führungsbolzen an den Seitenwänden befestigt sein, die Langlöcher mit einer Querschnittsverengung durchgreifen. Um die Führungsbolzen über die Querschnittsverengung zu drücken und die Führungsanschläge in der nach oben verschobenen Position festzulegen, ist jeweils das Eigengewicht der Energieführungskette ausreichend. Dies gilt in gleicher Weise beim Zurückfahren der Kette, wo die Führungsanschläge um 180° umgelenkt und bei Bodenberührung aus ihrer festgelegten Stellung durch das Eigengewicht der Kette wieder in ihre ursprüngliche Position gedrückt werden.

Neben diesen Ausführungsarten der Erfindung sind auch Führungsanschläge verwendbar, die nach Art eines zweifach gelagerten Hebels an den Seitenwänden befestigt sind, wobei im Bereich des Untertrums die Führungsfläche zunächst nicht über die Seitenwände des unteren Kettenbereiches nach oben hervorragt.

Durch Anschlagmittel kann der Hebel jedoch im Bereich des Umlenkbereiches derart verschwenkt und festgelegt werden, daß er, sobald er eine Position im Obertrum erreicht hat, nun mit seiner Führungsfläche nach unten die Seitenwandung überragt und auf diese Weise die Seitenwände des Untertrums übergreift, so daß die gegenseitige Führung der Trums wiederum erreicht wird.

Beim Zurücklaufen der Kette verschwenkt sich der Hebel selbsttätig in seine Ausgangsstellung zurück.

Führungsanschläge, die beim Zurücklaufen der Kette nach Durchlaufen des Umlenkbereiches durch das Eigengewicht der Kette nach oben gedrückt werden, weisen vorzugsweise abgerundete oder abgeschrägte Seitenkanten auf, mit denen sie auf den Unterboden auftreffen, so daß ein ruckfreies Anheben der Führungsanschläge erfolgen kann.

Die Erfindung ist in der Zeichnung beispielsweise veranschaulicht und wird im folgenden anhand der Zeichnung im einzelnen beschrieben. Es zeigen:
- Fig. 1: eine Energieführungskette, bestehend aus Untertrum, einem Umlenkbereich und einem Obertrum, an deren Seitenwänden nach oben verschiebbare und in einer oberen Position fixierbare Führungsanschläge vorgesehen sind,
- Fig. 2: eine Führungskette gemäß Fig. 1 mit als dreiarmige Drehsterne ausgebildeten Führungsanschlägen,
- Fig. 3: eine Energieführungskette gem. Fig. 1 oder 2 mit als zweifach gelagerte Hebel ausgebildeten Führungsanschlägen und
- Fig. 4: eine Energieführungskette gem. Fig. 1 bis 3 mit nach oben verschwenkbaren ankerartigen Führungsanschlägen.

Die in den Zeichnungsfiguren 1 bis 4 dargestellte Energieführungskette 1 besteht aus einer Vielzahl von Kettengliedern 2, die an ihren Enden mit Hilfe von Gelenkbolzen 3 begrenzt verschwenkbar miteinander verbunden sind. Die Kettenglieder 2 bestehen aus Seitenwänden 4, von denen aufgrund der Seitenansicht nur die vorderen Seitenwände 4 zu erkennen sind. Die gegenüberliegenden Seitenwände 4 werden durch ebenfalls nicht sichtbare obere und untere Querstege miteinander verbunden.

Die Energieführungskette 1 besteht aus einem Untertrum 5 und einem Obertrum 6, das sich mittels eines Umlenkbereiches 7 von 180° an das Untertrum 5 anschließt. In einem mittleren Bereich 8 läuft die Unterseite 9 des Obertrums 6 gleitend auf der Oberseite 10 des Untertrums 5. An den Seitenwänden 4 von im Abstand angeordneten Kettengliedern 2 sind schlittenähnliche Führungsanschläge 11 vorgesehen und mit Hilfe von zwei Führungsbolzen 12 an den jeweiligen Seitenwänden 4 befestigt. Die Führungsbolzen 12 durchgreifen zwei Langlöcher 13, so daß die Führungsanschläge 11 in vertikaler Richtung senkrecht zur Laufrichtung der Energieführungskette 1 begrenzt bewegbar bzw. verschiebbar sind.

Die im Bereich des Untertrums 5 angeordneten Führungsanschläge, der auf einem nicht dargestellten Boden aufliegt, überragen die Seitenwände 4 des Untertrums 5 mit einer Führungsfläche 14 nach oben und führen auf diese Weise das Obertrum 6 im mittleren Bereich 8.

Nach Durchlaufen des Umlenkbereiches 7 fällt der Führungsanschlag 11 unter der Wirkung der Schwerkraft nach unten und nimmt die gemäß Position A gezeigte Stellung ein. Beim Weiterlaufen des Obertrums 6 berühren sich die Anlaufschrägen 15 des oberen und des unteren Führungsanschlages, wobei der obere Führungsanschlag nach oben verschoben wird und in eine Stellung gemäß Position B gedrückt wird. In dieser Stellung B wird er durch Querschnittsverengungen 16 der Langlöcher 13 festgelegt.

Auf diese Weise können die Führungsanschläge 11 des Obertrums 6 problemlos an den Führungsanschlägen 11 des Untertrums 5 vorbeilaufen, ohne daß die Energieführungskette 1 in diesen Bereichen angehoben wird oder die Relativbewegung der Trums gestört wird.

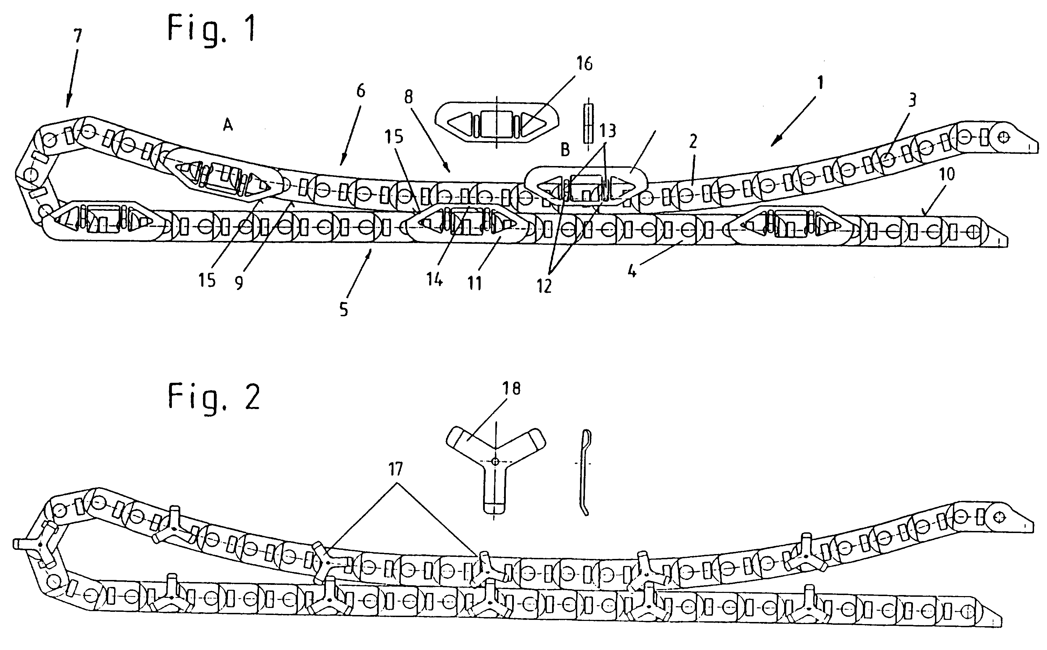

Bei dem in Fig. 2 dargestellten Führungsanschlag handelt es sich um ein drehbar gelagertes Sternenkreuz 17 mit drei Armen 18.

Beim Gleiten des Obertrums 6 auf dem Untertrum 5 greifen die Sternenkreuze 16 nach Art von Zahnrädern ineinander, so daß die oberen Sternenkreuze 17 im Uhrzeigersinn weggedreht werden und die Führungsanschläge auch bei dieser Ausführung ohne Anheben der Kette im mittleren Bereich 8 aneinander vorbei bewegt werden können.

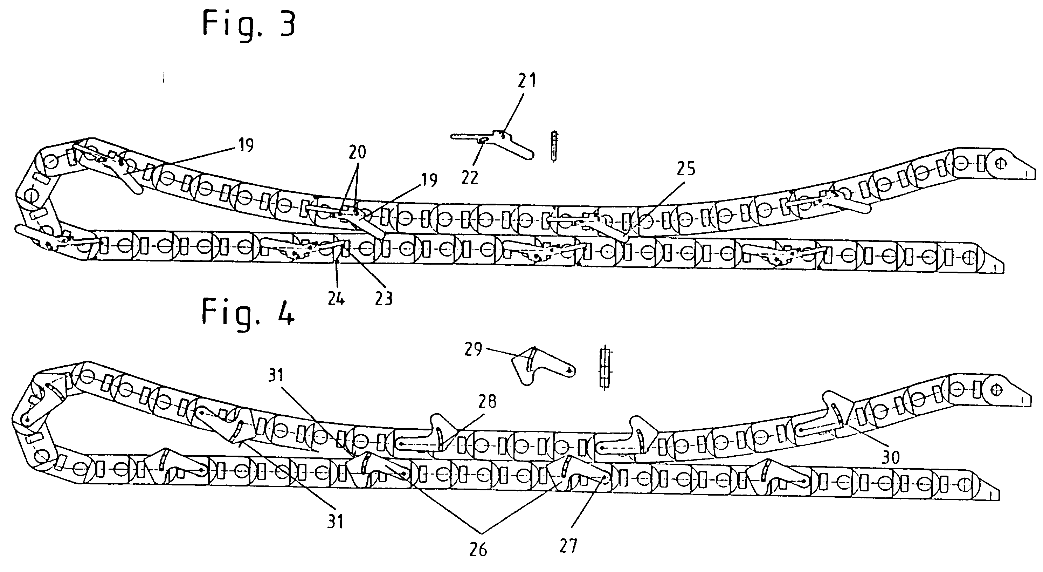

Bei der Ausführung gem. Fig. 3 sind die Führungsanschläge 11 als zweifach gelagerte Schwenkhebel 19 ausgebildet, wobei die Lagerung durch Bolzen 20 erfolgt, die zwei gekrümmte Langlöcher 21, 22 durchgreifen.

Durch Anschläge 23, 24 werden die Schwenkhebel 19 im Umlenkbereich 7 derart verschwenkt, daß ihre Führungsfläche 25 im Bereich des Obertrums 6 die Seitenwände 4 des Untertrums 5 übergreift und somit eine gegenseitige Führung gegeben ist.

Bei dem ebenfalls in einer Seitenansicht dargestellten Ausführungsbeispiel gemäß Fig. 4 bestehen die Führungsanschläge 11 aus verschwenkbar gelagerten, ankerförmigen Hebeln 26, die mit Hilfe eines Drehbolzens 27 an den Seitenwänden 4 der Kettenglieder 2 befestigt sind und in ihrer Schwenkbewegung durch einen Bolzen 28 begrenzt werden, der ein gekrümmtes Langloch 29 des Hebels 26 durchgreift.

Das Langloch 29 weist wiederum eine Querschnittsverengung 30 auf, die zu einer Festlegung des Hebels 26 in der nach oben geschwenkten Stellung im Bereich des Obertrums 6 führt. Zum Hochdrücken der Hebel 26 im Bereich des Obertrums 6 dienen wiederum Anlaufschrägen 31, die nach Art der in Fig. 1 gezeigten Anlaufschrägen 15 der Führungsanschläge 11 zusammenwirken.

### Bezugszeichenliste

- 1: Energieführungskette
- 2: Kettenglied
- 3: Gelenkbolzen
- 4: Seitenwand
- 5: Untertrum
- 6: Obertrum
- 7: Umlenkbereich
- 8: mittlerer Bereich
- 9: Unterseite
- 10: Oberseite
- 11: schlittenähnlicher Führungsanschlag
- 12: Führungsbolzen
- 13: Langloch
- 14: Führungsfläche
- 15: Anlaufschräge
- 16: Querschnittsverengung
- 17: Sternenkreuz
- 18: Arm
- 19: Schwenkhebel
- 20: Bolzen
- 21: Langloch
- 22: Langloch
- 23: Anschlag
- 24: Anschlag
- 25: Führungsfläche
- 26: ankerförmiger Hebel
- 27: Drehbolzen
- 28: Bolzen
- 29: Langloch
- 30: Querschnittsverengung
- 31: Anlaufschräge

## Patentansprüche

1. Energieführungskette (1) zur Aufnahme und zum Führen von Stromkabeln, Hydraulikschläuchen und dergleichen, deren Kettenglieder (2) aus gegenüberliegenden Seitenwänden (4) und diese verbindenden gegenüberliegenden Querstegen bestehen, wobei die Seitenwände (4) benachbarter Kettenglieder (2) gelenkig miteinander verbunden sind und ihre Verschwenkbarkeit relativ zueinander in beide Richtungen durch Anschläge begrenzt ist, wobei weiterhin die Energieführungskette (1) beim Betrieb des an die Kabel bzw. Schläuche angeschlossenen Energieverbrauchers einen unteren, etwa geradlinigen Bereich (Untertrum 5) bildet, an den sich mittels eines Umlenkbereiches von 180° ein oberer, durchhängender Bereich (Obertrum 6) anschließt, der mit seiner Unterseite (9) zumindest teilweise auf der Oberseite (10) des Untertrums (5) gleitet, **dadurch gekennzeichnet,** daß Kettenglieder (2) vorgesehen sind, die an der Außenseite mindestens einer Seitenwand (4) einen Führungsanschlag (11, 17, 19, 26) für das gegenüberliegende Trum tragen, wobei die Führungsanschläge (11, 17, 19, 26) in einer zur Laufebene der Kette (1) senkrecht liegenden Ebene begrenzt bewegbar sind.

2. Energieführungskette nach Anspruch 1, **dadurch gekennzeichnet,** daß die Führungsfläche (14, 25) des Führungsanschlages (11, 17, 26) im Bereich des Untertrums (5) die Oberseite (10) des Kettengliedes (2) nach oben und die Unterseite (9) des Kettengliedes (2) im Bereich des Obertrums (6) nach unten überragt.

3. Energieführungskette nach Anspruch 1 oder 2, **dadurch gekennzeichnet,** daß die Führungsanschläge (11, 26) gerade oder kurvenförmige Anlaufschrägen (15, 31) aufweisen, wobei die Anlaufschrägen (15, 31) der Führungsanschläge (11, 26) des Obertrums (6) mit den Anlaufschrägen (15, 31) der Führungsanschläge (11, 26) des Untertrums (6) derart zusammenwirken, daß die Führungsanschläge (11, 17, 26) des Obertrums (6) verdreht, nach oben verschwenkt oder nach oben verschoben werden.

4. Energieführungskette nach Anspruch 3, **dadurch gekennzeichnet,** daß die Führungsanschläge (11, 26) des Obertrums (6) in ihrer nach oben verschwenkten oder verschobenen Stellung lösbar festlegbar sind.

## Claims

1. Energy guiding chain (1) for accommodating and guiding electric cables, hydraulic hoses and the like, the chain links (2) of which comprise side walls (4) positioned opposite each other and cross-members, also positioned opposite each other and connecting the side walls, where the side walls (4) of adjacent chain links (2) are connected to each other in articulated fashion and their pivoting movement relative to each other is restricted in both directions by means of stops, and where the energy guiding chain (1) forms a lower, roughly linear region (lower strand (5), when the energy consumer connected to the cables and/or hoses is operated, this being followed by an upper, sagging region (upper strand 6) via a deflection zone of 180°, the underside (9) of the upper strand (6) at least partially sliding over the top side (10) of the lower strand (5), **characterised in that** chain links (2) are provided which bear a guiding stop (11, 17, 19, 26) for the opposite strand on the outer side of at least one side wall (4), where the guiding stops (11, 17, 19, 26) can move to a limited extent in a plane perpendicular to the running plane of the chain (1).

2. Energy guiding chain as per Claim 1, **characterised in that** the guiding surface (14, 25) of the guiding stop (11, 17, 26) protrudes above the top side (10) of the chain link (2) in the region of the lower strand (5) and below the underside (9) of the chain link (2) in the region of the upper strand (6).

3. Energy guiding chain as per Claim 1 or 2, **characterised in that** the guiding stops (11, 26) display straight or curved run-up bevels (15, 31), where the run-up bevels (15, 31) of the guiding stops (11, 26) of the upper strand (6) interact with the run-up bevels (15, 31) of the guiding stops (11, 26) of the lower strand (5) in such a way that the guiding stops (11, 17, 26) of the upper strand (6) are turned, pivoted upwards or forced upwards.

4. Energy guiding chain as per Claim 3, **characterised in that** the guiding stops (11, 26) of the upper strand (6) can be locked in releasable manner in their upper position.

## Revendications

1. Chaîne de guidage d'énergie (1), pour supporter et guider des câbles électriques, des tuyaux hydrauliques et analogues, dont les maillons (2) sont constitués de parois latérales (4) opposées et de nervures transversales opposées reliant celles-ci, les parois latérales (4) de maillons (2) voisins étant reliées ensemble de manière articulée et leur capacité de pivotement mutuel étant limitée dans les deux directions au moyen de butées, en outre la chaîne de guidage d'énergie (1) constituant, lorsque le consommateur d'énergie raccordé aux câbles et/ou aux tuyaux est en fonctionnement, une zone inférieure, à peu près rectiligne (brin inférieur 5), à laquelle se raccorde, au moyen d'une zone de renvoi à 180°, une zone supérieure lâche (brin supérieur 6), qui, par sa face inférieure (9), glisse au moins partiellement sur la face supérieure (10) du brin inférieur (5), caractérisée en ce que sont prévus des maillons (2) portant, en face extérieure d'au moins une paroi latérale (4), une butée de guidage (11, 17, 19, 26) destinée au brin placé en face, les butées de guidage (11, 17, 19, 26) étant déplaçables de façon limitée dans un plan perpendiculaire au plan de défilement de la chaîne (1).

2. Chaîne de guidage d'énergie selon la revendication 1, caractérisée en ce que la surface de guidage (14, 25) de la butée de guidage (11, 17, 26), dans la zone du brin inférieur (5), dépasse, vers le haut, de la face supérieure (10) du maillon (2) et la face inférieure (9) du maillon (2) dépasse, vers le bas, dans la zone du brin supérieur (6).

3. Chaîne de guidage d'énergie selon la revendication 1 ou 2, caractérisée en ce que les butées de guidage (11, 26) présentent des pentes de franchissement (15, 31) rectilignes ou courbes, les pentes de franchissement (15, 31) des butées de guidage (11, 26) du brin supérieur (6) coopérant avec les pentes de franchissement (15, 31) des butées de guidage (11, 26) du brin inférieur (6), de manière que les butées de guidage (11, 17, 26) du brin supérieur (6) soient tournées, pivotées vers le haut ou décalées vers le haut.

4. Chaîne de guidage d'énergie selon la revendication 3, caractérisée en ce que les butées de guidage (11, 26) du brin supérieur (6) sont susceptibles d'être fixées de façon désolidarisable, dans leur position pivotée vers le haut ou décalée vers le haut.
